# EUROPÄISCHE PATENTSCHRIFT

(11) **EP 1 415 874 B1**
(45) Veröffentlichungstag und Bekanntmachung des Hinweises auf die Patenterteilung: **17.03.2010**
(21) Anmeldenummer: 03022686.4
(22) Anmeldetag: 07.10.2003
(51) Int. Cl.: B60S 5/06

(54) **Batteriewechselsystem für ein Flurförderzeug**
Battery exchange system for an industrial truck
Système de changement de batterie pour un chariot de manutention

(30) Priorität: 28.10.2002 DE 10250140
(43) Veröffentlichungstag der Anmeldung: 06.05.2004
(73) Patentinhaber: STILL GmbH, 22113 Hamburg (DE)
(72) Erfinder: Buchmann, Michael, 21509 Glinde (DE); Neumann, Udo, 22946 Brunsbek (DE)
(74) Vertreter: Geirhos, Johann

(56) Entgegenhaltungen:
- EP-A- 0 030 928
- EP-A- 1 095 831
- WO-A-00/58139
- GB-A- 2 317 872
- US-A- 5 595 442
- US-A- 5 998 963
- PATENT ABSTRACTS OF JAPAN Bd. 1996, Nr. 10, 31. Oktober 1996 (1996-10-31) & JP 08 165094 A (NIPPON YUSOKI CO LTD), 25. Juni 1996 (1996-06-25)

## Beschreibung

Die Erfindung betrifft ein Batteriewechselsystem mit zumindest einem Flurförderzeug, insbesondere einem Gabelstapler, der einen seitlichen Batteriewechsel, mit einem in horizontaler Richtung mittels einer Rollenbahn relativ zu einem mit einer seitlichen Öffnung versehenen Batteriefach des Flurförderzeugs bewegbarem Batterieblock, aufweist, und mit einer Rollenbahn, die als externe und in vertikaler Richtung bewegbare Rollenbahn ausgebildet ist, die zum Batteriewechsel, der in horizontaler Richtung über die seitliche Öffnung des Batteriefaches erfolgt, unter das den Batterieblock aufnehmende Batteriefach des Flurförderzeugs bringbar und anhebbar ist, wobei eine Bodenfläche des Batteriefachs des Flurförderzeugs mit zumindest einer Öffnung für die Rollenbahn versehen ist.

Bei Flurförderzeugen mit einem Batterieblock, der in horizontaler Richtung, beispielsweise in seitlicher Richtung, aus dem Batteriefach heraus geschoben bzw. in das Batteriefach hinein geschoben wird, sind Batteriewechselsysteme bekannt, bei denen die Bodenfläche des Batteriefach des Flurförderzeugs mit einer waagerechten Rollenbahn versehen ist. Zum Batteriewechsel wird neben das Flurförderzeug eine externe Rollenbahn angeordnet, die an die zum Flurförderzeug gehörende Rollenbahn anschließt, wodurch der Batterieblock vollständig aus dem Batteriefach herausgezogen werden kann. Zudem ist bekannt, bei Flurförderzeugen die an der Bodenfläche des Batteriefaches angeordnete Rollenbahn derart ausziehbar oder ausklappbar zu gestalten, dass der Batterieblock auf der fest am Flurförderzeug angeordneten Rollenbahn vollständig aus dem Batteriefach herausgezogen werden kann. Ein Weitertransport des Batterieblocks kann dann mit einem Handhubwagen, einem Hallenkran oder einem anderen Flurförderzeug erfolgen. Derartige Batteriewechselsysteme werden bei Flurförderzeugen verschiendenster Bauart, beispielsweise Elektro-Gegengewichtsgabelstapler, Schubmaststapler, Nieder- oder Hochhubwagen eingesetzt.

Ein Nachteil bei derartigen Batteriewechselsystemen ist jedoch, dass aufgrund der in jedem Flurförderzeug fest angeordneten Rollenbahn an jedem Flurförderzeug Mehrkosten auftreten. Durch die Lagerung des Batterieblocks im Batteriefach auf der Rollenbahn ist der Batterieblock während des Betriebs des Flurförderzeugs zu sichern und zu fixieren, um ein Bewegen des Batterieblocks, beispielsweise ein Anschlagen an die Wände des Batteriefaches, zu vermeiden. Diese Sicherung des Batterieblocks ist weiterhin erforderlich, um bei Flurförderzeugen mit einem seitlichen Batteriewechsel ein ungewolltes seitliches Herausrollen des Batterieblocks bei geöffneter Seitenwand des Batteriefachs zu vermeiden. Diese Sicherung des Batterieblocks verursacht ebenfalls zusätzliche Mehrkosten. Desweiteren ist eine Antriebseinrichtung für den Batterieblock, beispielsweise ein Antrieb für die Rollenbahn, der bei schweren Batterieblöcken, die manuell nicht mehr verschoben werden können, erforderlich ist, im Flurförderzeug nur mit erheblichem zusätzlichen Bauaufwand und Kostenaufwand zu verwirklichen. Im Bereich der Kontaktstellen zwischen den Rollen der Rollenbahn und dem Batterieblock treten aufgrund des hohen Gewichts des Batterieblocks hohe Belastungen auf, wodurch diese Bereiche einem hohen Verschleiß ausgesetzt sind. Zudem benötigt die in dem Batteriefach fahrzeugfest angeordnete Rollenbahn zusätzlichen Bauraum, insbesondere Bauhöhe, der im Widerspruch zu kompakten Abmessungen des Flurförderzeugs steht.

Ein gattungsgemäßes Batteriewechselsystem ist aus der EP 0 030 928 bekannt. Das Flurförderzeug ist mit einem in Querrichtung des Flurförderzeugs mittig geteilten Batteriefach versehen, wobei zwei Batterieblöcke jeweils zu einer Seite in horizontaler Richtung relativ zu dem jeweiligen Batteriefach mittels einer externen und in vertikaler Richtung bewegbaren Rollenbahn bewegbar sind. Die externe und in vertikaler Richtung bewegbare Rollenbahn ist an einem Deichselhubwagen an den Lastgabeln ausgebildet. Die Rollenbahn ist hierbei einteilig. Die Länge der Lastgabeln und somit die Länge der Rollenbahn ist derart bemessen, dass ein Batteriefach von einer Seite des Flurförderzeugs zum Batteriewechsel unterfahren werden kann und der entsprechende Batterieblock seitlich neben das Flurförderzeug bewegt werden kann. Der Batteriewechsel des Flurförderzeugs ist hierbei jedoch aufwendig und zeitintensiv, da zum Batteriewechsel beider Batterieblöcke der Gabelhubwagen mit der externen Rollenbahn an beiden Seiten des Flurförderzeugs positioniert werden muss. Bei einem Flurförderzeug mit einem Batteriefach, das sich über die gesamte Breite des Flurförderzeugs erstreckt und in dem eine einziger Batterieblock angeordnet ist, kann mit einer derartigen einteiligen Rollenbahn, dessen Länge der standartisierten Abmessungen der Lastgabeln des Handgabelhubwagens entspricht, ein Batteriewechsel nicht durchgeführt werden.

Der vorliegenden Erfindung liegt die Aufgabe zugrunde, ein Batteriewechselsystem der eingangs genannten Gattung zur Verfügung zu stellen, mit dem ein Batteriewechsel bei geringen Mehrkosten am Flurförderzeug ermöglicht wird.

Diese Aufgabe wird erfindungsgemäß dadurch gelöst, dass das Batteriewechselsystem eine Mehrzahl verschiedener Flurförderzeuge umfasst und die Rollenbahn einen ersten Abschnitt und zumindest einen in Verlängerung des ersten Abschnitts bewegbaren zweiten Abschnitt aufweist,
wobei der zweite, in Verlängerung des ersten Abschnittes bewegbare Abschnitt mittels einer Führungseinrichtung am ersten Abschnitt längsverschiebbar gelagert ist.

Durch die Verwendung einer in Längsrichtung zwei- oder mehrteiligen, externen, nicht zum Flurförderzeug gehörende Rollenbahn, die unter den Batterieblock bringbar und anhebbar sowie absenkbar ist, ist im Flurförderzeug keine fest angeordnete Rollenbahn erforderlich. Ein erfindungsgemäßes Batteriewechselsystem mit einer derartigen mehrteiligen, externen Rollenbahn kann somit zum Batteriewechsel für viele und verschiedene Flurförderzeuge verwendet werden. An den Flurförderzeugen ist hierzu lediglich an der Bodenfläche des Batteriefaches eine Öffnung für die Rollenbahn erforderlich, die auf einfache Weise mit geringen Mehrkosten herstellbar ist. Der Batterieblock kann hierbei im Flurförderzeug direkt oder mittels Gummilager auf der Bodenfläche des Batteriefaches stehen, wodurch der Batterieblock gegenüber Flurförderzeugen mit in dem Batteriefach integrierter Rollenbahn geringeren Belastungen und geringerem Verschleiß ausgesetzt ist. Zudem kann auf eine Sicherung des Batterieblocks verzichtet werden, da ein Anschlagen des Batterieblocks während des Betriebs des Flurförderzeugs an die seitlichen Begrenzungen des Batteriefaches durch die direkte Anordnung des Batterieblocks auf der Bodenfläche und ein unkontrolliertes Herausrollen des Batterieblockes bei geöffneter Seitenwand vermieden werden kann. Durch den Wegfall der fahrzeugfesten Rollenbahn wird zudem kein zusätzlicher Bauraum, insbesondere Bauhöhe, für das Batteriewechselsystem im Flurförderzeug benötigt, wodurch ein Flurförderzeug mit kompakten Abmessungen geschaffen werden kann. Bei der erfindungsgemäßen Rollenbahn mit einem ersten Abschnitt und zumindest einen in Verlängerung des ersten Abschnitts bewegbaren zweiten Abschnitt weist die Rollenbahn kompakte Abmessungen auf.

Gemäß einer bevorzugten Ausführungsform ist mittels der Rollenbahn der Batterieblock vollständig aus dem Batteriefach bewegbar. Die Rollenbahn weist somit eine derartige Länge auf, dass der Batterieblock zum Batteriewechsel vollständig auf der Rollenbahn aus dem Batteriefach heraus bewegbar ist bzw. ein neuer Batterieblock auf der Rollenbahn abgesetzt werden kann und in das Batteriefach hinein geschoben werden kann.

Die Bodenfläche des Batteriefaches des Flurförderzeugs kann gemäß einer zweckmäßigen Ausgestaltungsform der Erfindung für jede Rolle der Rollenbahn mit einer Öffnung versehen sein. Durch mehrere in der Bodenfläche des Batteriefaches ausgebildete Öffnungen, in denen jeweils eine Rolle der Rollenbahn eintauchen kann, kann auf einfache Weise der Batterieblock mittels der Rollenbahn zum Batteriewechsel angehoben bzw. abgesenkt werden.

Besondere Vorteile ergeben sich, wenn gemäß einer weiteren Ausgestaltungsform der Erfindung die Bodenfläche des Batteriefaches mit einer Öffnung für mehrere Rollen der Rollenbahn versehen ist. Mit einem entsprechend groß dimensionierten Ausschnitt in der Bodenfläche des Batteriefachs kann mittels der Rollenbahn ebenfalls der Batterieblock angehoben bzw. abgesenkt werden. Durch die Ausnehmung an der Bodenfläche ist ein einfacher Batteriewechsel möglich, da an die Positionierung der Rollenbahn geringe Anforderungen gestellt sind. Zudem können unterschiedliche Rollenbahnen mit verschiedener Anordnung der Rollen zum Batteriewechsel verwendet werden.

Besondere Vorteile ergeben sich, wenn die Rollenbahn gemäß einer Ausführungsform mit einer fahrbaren Vorrichtung und/oder mit einer Hubvorrichtung in Wirkverbindung steht. Die Rollenbahn kann hierzu als fahrbare Vorrichtung mit einer Hubvorrichtung ausgebildet werden. Zudem ist es möglich, die Rollenbahn als Aufsatz für ein Flurförderzeug auszubilden, beispielsweise für einen Gabelhubwagen. Hierdurch kann auf einfache Weise eine fahrbare und anhebbare sowie absenkbare Rollenbahn zur Verfügung gestellt werden.

Die Rollenbahn kann zudem gemäß einer alternativen Ausführungsform stationär ausgebildet sein und mit einer Hubvorrichtung in Wirkverbindung stehen. Die Rollenbahn kann beispielsweise in der Fahrbahnoberfläche versenkbar sein, so dass das Flurförderzeug zur Positionierung für den Batteriewechsel die Rollenbahn überfahren kann.

Der Batterieblock kann auf der Rollenbahn manuell bewegt werden. Insbesondere bei schweren Batterieblöcken, die manuell nicht mehr verschoben werden können, ist es vorteilhaft, wenn zum Bewegen des Batterieblocks eine Antriebseinrichtung vorgesehen ist. Eine Rollenbahn mit einer Antriebseinrichtung für den Batterieblock kann zudem auf einfache Weise in eine Anlage für den automatischen Batteriewechsel eingebunden wurden.

Die Antriebseinrichtung kann gemäß einer Ausgestaltungsform als Antrieb für zumindest eine Rolle der Rollenbahn ausgebildet sein.

Wenn die Rollenbahn gemäß einer vorteilhaften Weiterbildung der Erfindung mit einem Anschlag versehen ist, kann die Endlage des außerhalb des Batteriefaches auf der Rollenbahn befindlichen Batterieblocks auf einfache Weise definiert werden. Hierdurch kann ein Weiterrollen des Batterieblocks über das Ende der Rollenbahn verhindert und ein sicherer Weitertransport bzw. ein sicheres Absetzen des Batterieblocks ermöglicht werden.

Besondere Vorteile ergeben sich, wenn an der Rollenbahn eine Haltevorrichtung zum Verbinden der Rollenbahn mit dem Flurförderzeug vorgesehen ist. Mit der Haltevorrichtung kann auf einfache Weise während des Batteriewechsels die Rollenbahn mit dem Flurförderzeug gekoppelt werden. Hierdurch kann ein Wegrutschen der Rollenbahn während des Herausziehens bzw. Hineinschiebens des Batterieblocks verhindert werden und somit ein sicherer Batteriewechsel erzielt werden.

Weitere Vorteile und Einzelheiten der Erfindung werden anhand der in den schematischen Figuren dargestellten Ausführungsbeispiele näher erläutert. Hierbei zeigt
- Figur 1a: eine nicht zur Erfindung gehörende erste Ausführungsform eines Batteriewechselsystem in einer Seitenansicht,
- Figur 1b: das Batteriewechselsystem gemäß Figur 1a in der Draufsicht,
- Figur 2a: eine nicht zur Erfindung gehörende zweite Ausführungsform eines Batteriewechselsystem in einer Seitenansicht,
- Figur 2b: das Batteriewechselsystem gemäß Figur 2a in der Draufsicht,
- Figur 3a: eine nicht zur Erfindung gehörende dritte Ausführungsform eines Batteriewechselsystem in einer Seitenansicht,
- Figur 3b: das Batteriewechselsystem gemäß Figur 3a in der Draufsicht,
- Figur 4a: eine Ausführungsform eines erfindungsgemäßen Batteriewechselsystem in einer Seitenansicht und
- Figur 4b: das Batteriewechselsystem gemäß Figur 4a in der Draufsicht.

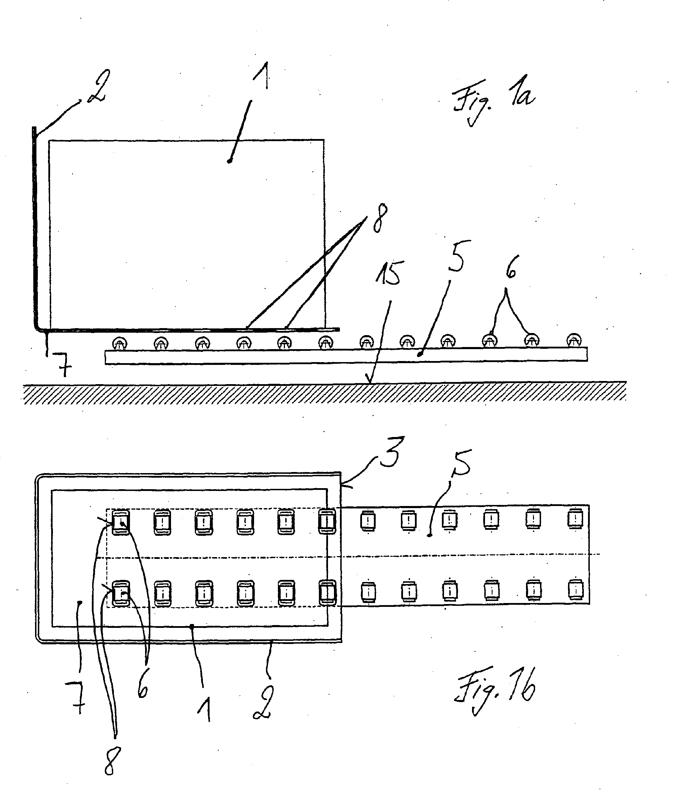

In den Figuren 1a und 1b ist ein Batteriewechselsystem für den Batteriewechsel eines Flurförderzeugs, beispielsweise eines Gabelstaplers mit seitlichem Batteriewechsel, gezeigt. Ein Batterieblock 1 ist in einem Batteriefach 2 des Flurförderzeugs angeordnet. Das Batteriefach 2 ist im rechten Bereich mit einer verschließbaren, beispielsweise mittels einer klappbaren Seitenwand, Öffnung 3 versehen, durch die der Batterieblock 1 in horizontaler Richtung aus dem Batteriefach 2 entfernt oder in das Batteriefach 2 eingesetzt werden kann.

Zum Batteriewechsel ist ein externe, in vertikaler Richtung bewegbaren Rollenbahn 5 vorgesehen. Die Rollenbahn 5 besteht aus mehreren einreihig oder mehrreihig angeordneten Rollen 6. Die Bodenfläche 7 des Batteriefaches 2 des Flurförderzeugs ist für jede Rolle 6 der Rollenbahn 5 mit einer Öffnung 8 versehen.

Zum Entfernen des Batterieblocks 1 wird die Rollenbahn 5 unter dem Batteriefach 2 derart angeordnet, dass die Rollen 6 der Rollenbahn 5 mit den Öffnungen 8 übereinstimmen, und in vertikaler Richtung angehoben. Die Rollen 6 der Rollenbahn 5 gelangen hierbei durch die Öffnungen 8 der Bodenfläche 7 des Batteriefaches 2 in Kontakt mit dem Batterieblock 1. Mittels der Rollenbahn 5 wird somit der Batterieblock 1 angehoben und kann in horizontaler Richtung aus dem Batteriefach 2 herausbewegt werden. Die Rollenbahn 5 weist hierbei eine derartige Länge auf, dass der Batterieblock 1 vollständig aus dem Batteriefach 2 herausbewegt werden kann. Bei einem Flurförderzeug mit einem seitlichen Batteriewechsel kann somit der Batterieblock vollständig neben das Flurförderzeug bewegt werden. In dieser Stellung kann der Batterieblock 1 mit einem weiteren Transportsystem, beispielsweise einem Kran oder einem weiteren Flurförderzeug aufgenommen werden.

Das Einsetzten eines neuen Batterieblocks 1 erfolgt in umgekehrter Reihenfolge. Zum Einsetzen eines neuen Batterieblocks 1 wird der Batterieblock 1 auf der Rollenbahn 5 neben dem Batteriefach 2 abgesetzt, von der Stellung neben dem Flurförderzeug in das Batteriefach 2 durch die Öffnung 3 hineinbewegt und anschließend die Rollenbahn 5 abgesenkt. Der Batterieblock 1 steht somit auf der Bodenfläche 7 des Batteriefaches 2 auf. Die Rollenbahn 5 kann anschließend herausgezogen werden.

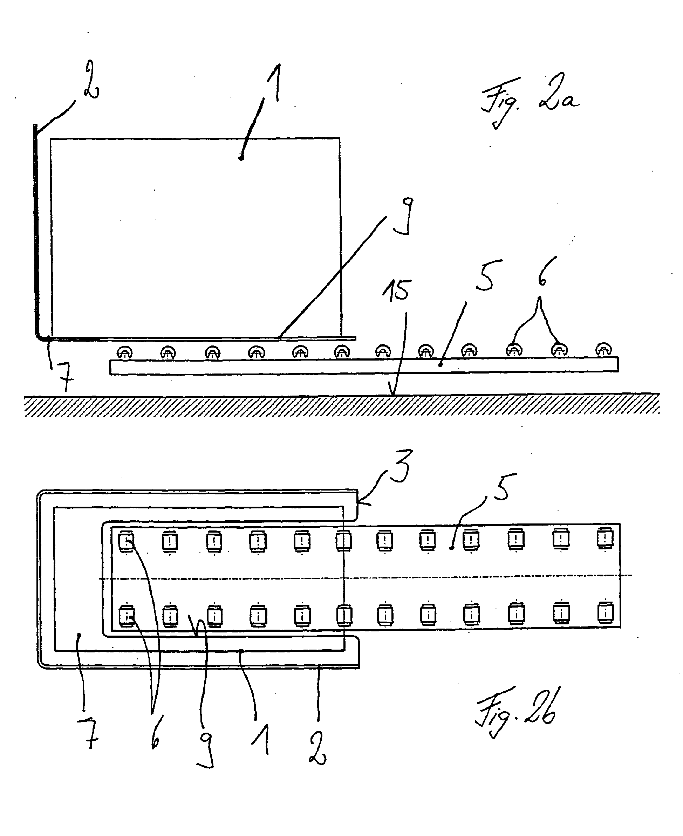

Anstelle der Öffnungen 8 für jede Rolle 6 der Rollenbahn 5 ist gemäß Figuren 2a, 2b die Bodenfläche 7 des Batteriefaches mit einer Öffnung 9 für mehrerer Rollen 6 der Rollenbahn 5 versehen. Die Öffnung 9 kann hierbei unterbrechungsfrei an die seitliche Öffnung 3 des Batteriefaches 2 anschließen.

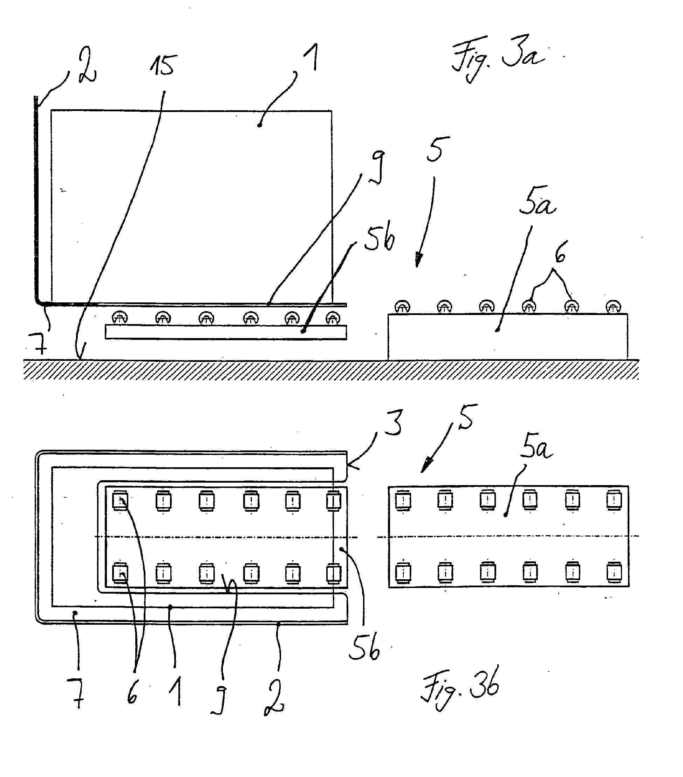

In den Figuren 3a und 3b ist eine Rollenbahn 5 mit einem zweiteiligen Aufbau gezeigt. Ein erster Abschnitt 5a der Rollenbahn 5 ist feststehend und zum Batteriewechsel neben das Batteriefach 2 bringbar. Der zweite Abschnitt 5b der Rollenbahn 5, ist in vertikaler Richtung bewegbar und zum Wechsel des Batterieblocks 1 anhebbar bzw. absenkbar. In der Bodenfläche 7 des Batteriefaches 2 kann eine Öffnung 9 für mehrere Rollen des Abschnitts 5b oder mehrere Öffnungen für jeweils eine Rolle 6 des Abschnitts 5b vorgesehen sein. Der feststehende Abschnitt 5a der Rollenbahn weist hierbei eine Höhe auf, die der Höhe des Abschnitts 5b der Rollenbahn 5 vor dem Absenken bzw. nach dem Anheben des Batterieblocks 1 entspricht, wodurch der Batterieblock 1 ohne Höhenunterschied in das Batteriefach 2 eingeschoben bzw. aus dem Batteriefach 2 heraus gezogen werden kann.

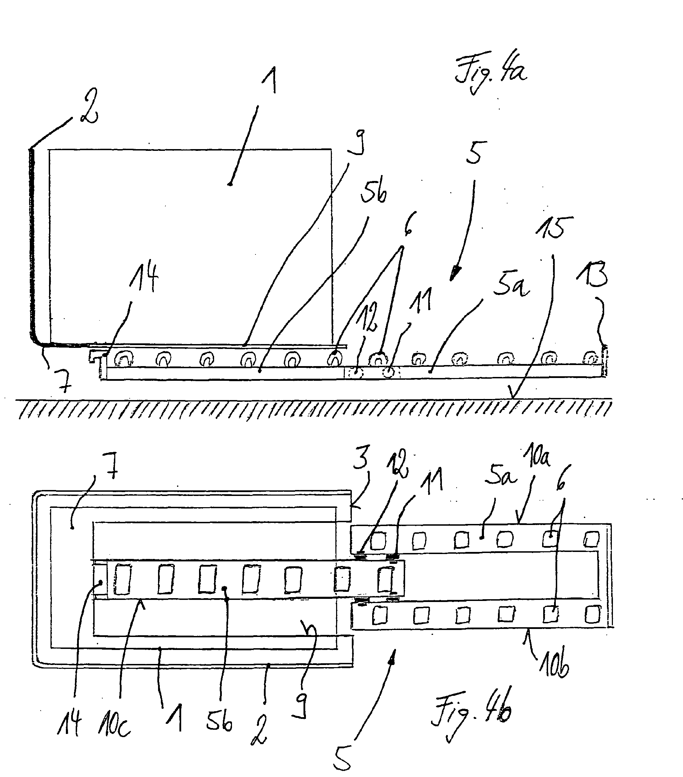

In den Figuren 4a, 4b ist eine vertikal bewegbare Rollenbahn 5 mit einem erfindungsgemäßen zweiteiligen Aufbau gezeigt, die einen ersten Abschnitt 5a und zumindest einen in Verlängerung des ersten Abschnitts 5a bewegbaren zweiten Abschnitt 5b aufweist. Der erste Abschnitt 5a weist zwei in Querrichtung beabstandete mit Rollen 6 versehene Längsträger 10a, 10b auf. Innerhalb der Längsträger 10a, 10b ist ein mit Rollen versehener Längsträger 10c des zweiten Abschnitts 5b längsverschiebbar gelagert. Hierzu kann eine als Führungsrollen 11, 12 ausgebildete Führungseinrichtung vorgesehen sein, wobei die Führungsrollen 12 am ersten Abschnitt 5a und die Führungsrollen 11 am zweiten Abschnitt 5b gelagert sind. Zum Batteriewechsel wird der zweite Abschnitt 5b aus dem ersten Abschnitt 5a herausgezogen und unter das Batteriefach 2 gebracht. Durch Anheben bzw. Absenken der Rollenbahn 5 kann hierbei der Batterieblock 1 aus dem Batteriefach 2 entfernt oder in das Batteriefach 2 eingesetzt werden.

An der Rollenbahn 5 kann ein Anschlag 13 vorgesehen sein, der die Bewegung des Batterieblocks 1 in der aus dem Batteriefach 2 herausgezogenen Position begrenzt.

An der Rollenbahn 5 kann eine Haltevorrichtung 14, beispielsweise ein Haken, vorgesehen sein, mittels der die Rollenbahn 5 bzw. der zweite Abschnitt 5b der Rollenbahn 5 mit dem Flurförderzeug verbindbar ist, um während des Herausziehens bzw. Einschieben des Batterieblockes 1 eine Relativbewegung zwischen der Rollenbahn 5 und dem Flurförderzeug zu vermeiden.

Die anhebbare Rollenbahn 5 gemäß den Figuren 1a, 1b, 2a, 2b und 4a, 4b bzw. der anhebbare Abschnitt 5b gemäß Figuren 3a, 3b kann durch eine integrierte Hubvorrichtung anhebbar bzw. absenkbar sein und mittels einer fahrbaren Vorrichtung unter das Flurförderzeug bewegt werden. Hierbei ist es möglich, die Rollenbahn 5 bzw. den anhebbaren Abschnitt 5b mittels eines Flurförderzeug, insbesondere eines Gabelhubwagens, anzuheben bzw. abzusenken und zu verfahren.

Zudem kann die Rollenbahn 5 gemäß den Figuren 1 bis 4 stationär ausgebildet sein und mittels einer geeigneten Hubvorrichtung in die Fahrbahn 15 versenkt werden, um zum Batteriewechsel von dem Flurförderzeug zur Positionierung der Rollenbahn 5 überfahren werden zu können.

Der Batterieblock 1 kann auf der Rollenbahn 5 manuell oder mittels einer geeigneten Antriebsvorrichtung, beispielsweise einer Gewindespindel oder eines Hydraulikzylinders, bewegt werden. Zudem ist es möglich, eine oder mehrere Rollen der Rollenbahn zum Bewegen des Batterieblocks mit einem Antrieb zu versehen.

## Patentansprüche

1. Batteriewechselsystem mit zumindest einem Flurförderzeug, insbesondere einem Gabelstapler, der einen seitlichen Batteriewechsel, mit einem in horizontaler Richtung mittels einer Rollenbahn (5) relativ zu einem mit einer seitlichen Öffnung (3) versehenen Batteriefach (2) des Flurförderzeugs bewegbarem Batterieblock (1), aufweist, und mit einer Rollenbahn, die als externe und in vertikaler Richtung bewegbare Rollenbahn (5) ausgebildet ist, die zum Batteriewechsel, der in horizontaler Richtung über die seitliche Öffnung (3) des Batteriefaches (2) erfolgt, unter das den Batterieblock (1) aufnehmende Batteriefach (2) des Flurförderzeugs bringbar und anhebbar ist, wobei eine Bodenfläche (7) des Batteriefachs (2) des Flurförderzeugs mit zumindest einer Öffnung (8; 9) für die Rollenbahn (5) versehen ist,
**dadurch gekennzeichnet,**
**dass** das Batteriewechselsystem eine Mehrzahl verschiedener Flurförderzeuge umfasst und die Rollenbahn (5) einen ersten Abschnitt (5a) und zumindest einen in Verlängerung des ersten Abschnitts (5a) bewegbaren zweiten Abschnitt (5b) aufweist,
wobei der zweite, in Verlängerung des ersten Abschnittes (5a) bewegbare Abschnitt (5b) mittels einer Führungseinrichtung (11,12) am ersten Abschnitt (5a) längsverschiebbar gelagert ist.

2. Batteriewechselsystem nach Anspruch 1, **dadurch gekennzeichnet, dass** mittels der Rollenbahn (5) der Batterieblock (1) vollständig aus dem Batteriefach (2) bewegbar ist.

3. Batteriewechselsystem nach Anspruch 1 oder 2, **dadurch gekennzeichnet, dass** die Bodenfläche (7) des Batteriefaches (2) des Flurförderzeugs für jede Rolle (6) der Rollenbahn (5) mit einer Öffnung (8) versehen ist.

4. Batteriewechselsystem nach Anspruch 1 oder 2, **dadurch gekennzeichnet, dass** die Bodenfläche (7) des Batteriefaches (2) des Flurförderzeugs mit einer Öffnung (9) für mehrere Rollen (6) der Rollenbahn (5) versehen ist.

5. Batteriewechselsystem nach einem der Ansprüche 1 bis 4, **dadurch gekennzeichnet, dass** die Rollenbahn (5) stationär ausgebildet ist und mit einer Hubvorrichtung in Wirkverbindung steht.

6. Batteriewechselsystem nach einem der Ansprüche 1 bis 5, **dadurch gekennzeichnet, dass** die Rollenbahn (5) mit einer fahrbaren Vorrichtung und/oder mit einer Hubvorrichtung in Wirkverbindung steht.

7. Batteriewechselsystem nach einem der Ansprüche 1 bis 6, **dadurch gekennzeichnet, dass** zum Bewegen des Batterieblocks (1) eine Antriebseinrichtung vorgesehen ist.

8. Batteriewechselsystem nach Anspruch 7, **dadurch gekennzeichnet, dass** die Antriebseinrichtung einen Antrieb für zumindest eine Rolle (6) der Rollenbahn (5) aufweist.

9. Batteriewechselsystem nach einem der Ansprüche 1 bis 8, **dadurch gekennzeichnet, dass** an der Rollenbahn (5) ein Anschlag (13) vorgesehen ist.

10. Batteriewechselsystem nach einem der Ansprüche 1 bis 9, **dadurch gekennzeichnet, dass** an der Rollenbahn (5) eine Haltevorrichtung (14) zum Verbinden der Rollenbahn mit dem Flurförderzeug vorgesehen ist.

## Claims

1. Battery changing system with at least one industrial truck, in particular a fork-lift truck, which has lateral battery changing, with a battery pack (1), which is capable of being moved in the horizontal direction by means of a roller conveyor (5) relative to a battery compartment (2) of the industrial truck, said battery compartment (2) being provided with a lateral opening (3), and with a roller conveyor, which is in the form of an external roller conveyor (5) which is capable of being moved in the vertical direction and can be brought beneath the battery compartment (2) of the industrial truck, said battery compartment (2) accommodating the battery pack (1), and raised in order to carry out the battery change, which takes place in the horizontal direction above the lateral opening (3) in the battery compartment (2), a bottom face (7) of the battery compartment (2) of the industrial truck being provided with at least one opening (8; 9) for the roller conveyor (5), **characterized in that** the battery changing system comprises a plurality of different industrial trucks, and the roller conveyor (5) has a first section (5a) and at least one second section (5b), which is capable of being moved as an extension of the first section (5a), the second section (5b), which is capable of being moved as an extension of the first section (5a), being mounted in longitudinally displaceable fashion on the first section (5a) by means of a guide device (11, 12).

2. Battery changing system according to Claim 1, **characterized in that** the battery pack (1) is capable of being moved completely out of the battery compartment (2) by means of the roller conveyor (5).

3. Battery changing system as claimed in Claim 1 or 2, **characterized in that** the bottom face (7) of the battery compartment (2) of the industrial truck is provided with an opening (8) for each roller (6) of the roller conveyor (5).

4. Battery changing system according to Claim 1 or 2, **characterized in that** the bottom face (7) of the battery compartment (2) of the industrial truck is provided with an opening (9) for a plurality of rollers (6) of the roller conveyor (5).

5. Battery changing system according to one of Claims 1 to 4, **characterized in that** the roller conveyor (5) is designed to be stationary and is operatively connected to a lifting apparatus.

6. Battery changing system according to one of Claims 1 to 5, **characterized in that** the roller conveyor (5) is operatively connected to a drivable apparatus and/or to a lifting apparatus.

7. Battery changing system according to one of Claims 1 to 6, **characterized in that** a drive device is provided in order to move the battery pack (1).

8. Battery changing system according to Claim 7, **characterized in that** the drive device has a drive for at least one roller (6) of the roller conveyor (5).

9. Battery changing system according to one of Claims 1 to 8, **characterized in that** a stop (13) is provided on the roller conveyor (5).

10. Battery changing system according to one of Claims 1 to 9, **characterized in that** a holding apparatus (14) for connecting the roller conveyor to the industrial truck is provided on the roller conveyor (5).

## Revendications

1. Système de changement de batterie comprenant au moins un chariot de manutention, en particulier un chariot élévateur à fourche, qui présente un changement de batterie latéral, avec un bloc batterie (1) déplaçable dans la direction horizontale au moyen d'une piste à rouleaux (5) par rapport à un compartiment de batterie (2) du chariot de manutention pourvu d'une ouverture latérale (3), et une piste à rouleaux, qui est réalisée sous forme de piste à rouleaux (5) externe et déplaçable dans la direction verticale, qui, pour le changement de batterie, qui a lieu dans la direction horizontale par le biais de l'ouverture latérale (3) du compartiment de batterie (2), peut être amenée sous le compartiment de batterie (2) du chariot de manutention recevant le bloc batterie (1) et peut être soulevée, une surface de base (7) du compartiment de batterie (2) du chariot de manutention étant pourvue d'au moins une ouverture (8 ; 9) pour la piste à rouleaux (5),
**caractérisé en ce que**
le système de changement de batterie comprend une pluralité de chariots de manutention différents et la piste à rouleaux (5) présente une première portion (5a) et au moins une deuxième portion (5b) déplaçable dans le prolongement de la première portion (5a),
la deuxième portion (5b) déplaçable dans le prolongement de la première portion (5a) étant montée de manière déplaçable en longueur sur la première portion (5a) au moyen d'un dispositif de guidage (11, 12).

2. Système de changement de batterie selon la revendication 1, **caractérisé en ce que** le bloc batterie (1) peut être complètement déplacé hors du compartiment de batterie (2) au moyen de la piste à rouleaux (5).

3. Système de changement de batterie selon la revendication 1 ou 2, **caractérisé en ce que** la surface de base (7) du compartiment de batterie (2) du chariot de manutention étant pourvue d'une ouverture (8) pour chaque rouleau (6) de la piste à rouleaux (5).

4. Système de changement de batterie selon la revendication 1 ou 2, **caractérisé en ce que** la surface de base (7) du compartiment de batterie (2) du chariot de manutention est pourvue d'une ouverture (9) pour plusieurs rouleaux (6) de la piste à rouleaux (5).

5. Système de changement de batterie selon l'une quelconque des revendications 1 à 4, **caractérisé en ce que** la piste à rouleaux (5) est réalisée sous forme stationnaire et est en liaison fonctionnelle avec un dispositif de levage.

6. Système de changement de batterie selon l'une quelconque des revendications 1 à 5, **caractérisé en ce que** la piste à rouleaux (5) est en liaison fonctionnelle avec un dispositif déplaçable et/ou avec un dispositif de levage.

7. Système de changement de batterie selon l'une quelconque des revendications 1 à 6, **caractérisé en ce que** pour le déplacement du bloc de batterie (1) on prévoit un dispositif d'entraînement.

8. Système de changement de batterie selon la revendication 7, **caractérisé en ce que** le dispositif d'entraînement présente un entraînement pour au moins un rouleau (6) de la piste à rouleaux (5).

9. Système de changement de batterie selon l'une quelconque des revendications 1 à 8, **caractérisé en ce que** l'on prévoit sur la piste à rouleaux (5) une butée (13).

10. Système de changement de batterie selon l'une quelconque des revendications 1 à 9, **caractérisé en ce qu'**un dispositif de retenue (14) est prévu sur la piste à rouleaux (5) pour relier la piste à rouleaux au chariot de manutention.
